Europäisches Patentamt

European Patent Office

Office européen des brevets

(11) Numéro de publication : **0 488 885 A1**

# (12) DEMANDE DE BREVET EUROPEEN

(21) Numéro de dépôt : **91403204.0**

(22) Date de dépôt : **27.11.91**

(51) Int. Cl.$^5$ : **B65D 90/10, F16J 13/08**

(30) Priorité : **30.11.90 FR 9015010**

(43) Date de publication de la demande :
**03.06.92 Bulletin 92/23**

(84) Etats contractants désignés :
**BE DE NL**

(71) Demandeur : **LA BUVETTE**
**Deville**
**F-08800 Montherme (FR)**

(72) Inventeur : **Gustin, Jean-Pierre**
**15, rue de l'Arquebuse**
**F-08000 Charleville Mezieres (FR)**

(74) Mandataire : **Loyer, Bertrand et al**
**Cabinet Pierre Loyer 77, rue Boissière**
**F-75116 Paris (FR)**

(54) **Dispositif de vidange pour récipient présentant une ouverture de vidange.**

(57)  Dispositif de vidange pour récipient présentant une ouverture (11) de vidange, du type comportant un bouchon (2) et une bride (3).

Le bouchon (2) est destiné à être positionné à l'extérieur du récipient (1), devant l'ouverture (11) de celui-ci, et, la bride (3) est destinée à être positionnée à l'intérieur du récipient (1) et comporte une tige filetée (30) s'étendant à travers une ouverture centrale (24) du bouchon (2) et portant un écrou (4) sur sa partie située du côté du bouchon (2) opposé au récipient (1).

Ladite bride (3) est de dimensions telles qu'elle puisse dans une première position traverser facilement ladite ouverture (11) tandis qu'elle est en appui contre la paroi (10) entourant l'ouverture (11) dans une seconde position, et porte, sur sa face (31) tournée vers la paroi (10) du récipient, une nervure (32) de forme telle qu'elle soit disposée en partie à proximité des bords de l'ouverture (11) lorsque la bride est dans sa seconde position.

FIG.1

EP 0 488 885 A1

Jouve, 18, rue Saint-Denis, 75001 PARIS

La présente invention concerne un dispositif de vidange pour récipient agricole tel qu'un abreuvoir, une auge ou une citerne d'alimentation.

De manière connue en soi, de tels récipients sont équipés de dispositifs de vidange composés d'un bouchon fileté que l'on dégage d'une ouverture circulaire lorsque l'on désire vider le contenu du récipient.

De telles réalisations posent, en utilisation, des problèmes de plusieurs types. D'une part les bouchons sont souvent difficiles à dévisser sans utiliser d'outils du fait du grippage des pièces dans le temps et, d'autre part l'écoulement se trouve dans de nombreux cas obstrué par des déchets contenus dans l'eau tels que de la paille, du foin, des grains de maïs ou des tourteaux.

Il est de plus très souvent impossible d'augmenter le diamètre de l'ouverture en raison de la place disponible et de l'augmentation des efforts à appliquer pour dévisser le bouchon tout en ne permettant pas toujours d'améliorer de façon significative l'efficacité de la vidange.

L'on peut penser proposer un dispositif de vidange d'un récipient utilisant des dispositions utilisées dans des dispositifs de fermeture de réservoirs ou citernes.

Les dispositifs connus tels que ceux décrits dans les documents FR 2 088 110 ou GB 2 207 946 comportent un bouchon disposé à l'intérieur du réservoir et maintenu en place par une bride disposée à l'extérieur du réservoir. De tels dispositifs ne peuvent être employés dans le cas d'une vidange car la sortie du bouchon est malaisée et ne peut pas être rapidement réalisée de l'extérieur. Le contenu du récipient s'écoulera alors autour du bouchon bien avant que le manipulateur ait eu le temps de le retirer.

D'autres dispositifs tels que ceux décrits dans les documents DE 28 34 270 et US 1 788 118 utilisent des dispositifs comportant un bouchon positionné à l'extérieur du réservoir et maintenu en place par une bride ou des bras situés dans le réservoir.

Ces dispositifs ne peuvent pas non plus être repris pour un dispositif de vidange du fait que les organes assurant la liaison du bouchon aux bras sont disposés à l'intérieur du réservoir ce qui, dans le cas d'une vidange nécessairement située en bas du récipient, mettrait ces organes de liaison au contact avec le liquide et entraînerait des grippages empêchant l'ouverture du dispositif de vidange.

La présente invention a alors pour objet de proposer un dispositif de vidange pour récipient qui permette de résoudre ces problèmes et d'obtenir une vidange rapide et efficace du récipient tout en étant très aisé à manipuler.

A cet effet, l'invention concerne un dispositif de vidange pour récipient présentant une ouverture de vidange, du type comportant un bouchon et une bride, caractérisé en ce que :

– le bouchon est destiné à être positionné à l'extérieur du récipient, devant l'ouverture de celui-ci,

– la bride est destinée à être positionnée à l'intérieur du récipient et comporte une tige filetée s'étendant à travers une ouverture centrale du bouchon et portant un écrou sur sa partie située du côté du bouchon opposé au récipient,

et en ce que ladite bride est de dimensions telles qu'elle puisse dans une première position traverser facilement ladite ouverture tandis qu'elle est en appui contre la paroi entourant l'ouverture dans une seconde position, et porte, sur sa face tournée vers la paroi du récipient, une nervure de forme telle qu'elle soit disposée en partie à proximité des bords de l'ouverture lorsque la bride est dans sa seconde position.

Le dispositif suivant l'invention est encore remarquable en ce que :

– l'ouverture du récipient est allongée et par exemple rectangulaire ;

– ladite ouverture est prévue dans une paroi verticale du récipient avec son grand côté disposé horizontalement ;

– le bouchon présente une face avant de même forme que l'ouverture de la paroi mais de dimensions légèrement inférieures afin d'être introduite sans difficulté dans ladite ouverture et une gorge autour de cette face avant, pour la mise en place d'un joint d'étanchéité destiné à être en appui contre la face externe du récipient ;

– la face avant dudit bouchon assure un positionnement parfait dudit bouchon dans l'ouverture ;

– la bride est rectangulaire avec sa grande dimension supérieure à la petite dimension de l'ouverture tout en étant inférieure à la grande dimension de celle-ci et sa petite dimension largement inférieure à la petite dimension de l'ouverture ;

– la tige filetée est portée par la face de la bride tournée vers la paroi du récipient ;

– la nervure de la bride est à proximité de l'ouverture par ses portions supérieure et inférieure, lesdites portions supérieure et inférieure de la nervure s'étendant à distance du bord de la bride afin que celle-ci soit en contact avec la surface interne du récipient ;

– une butée arrière est prévue à l'extrémité de la tige filetée afin d'éviter tout risque de perte de l'écrou et de dissociation du dispositif.

La présente invention sera mieux comprise par la description qui va suivre d'un exemple de réalisation de celle-ci en regard du dessin sur lequel :

– la figure 1 est une vue en coupe du récipient comportant le dispositif de l'invention suivant le plan vertical médian dudit dispositif,

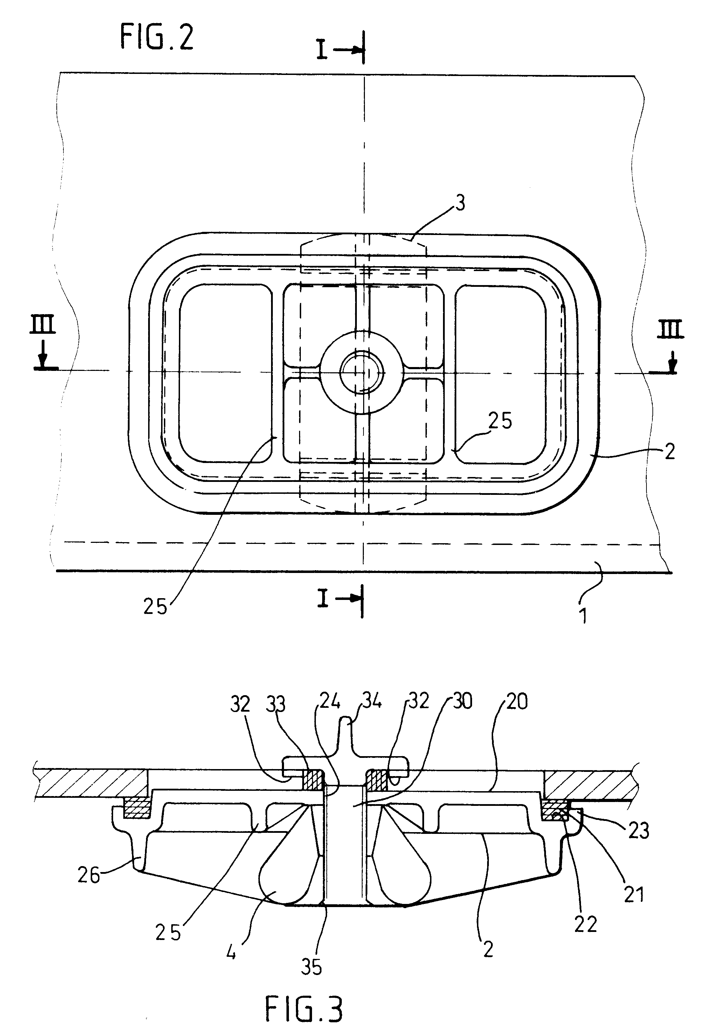

– la figure 2 est une vue suivant la flèche II de la figure 1,

– la figure 3 est une vue en coupe suivant la ligne III-III de la figure 2.

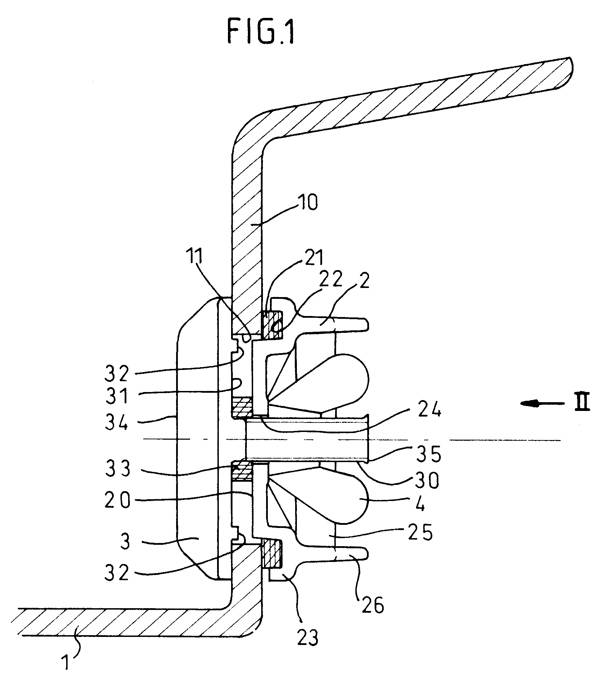

A la figure 1, on a représenté une partie du récipient 1 et plus spécialement la paroi verticale 10 de celui-ci à travers laquelle est prévue, en partie basse, l'ouverture 11 pour la vidange du récipient.

Suivant l'invention, cette ouverture 11 est allongée et par exemple rectangulaire tel que représenté, avec son grand côté disposé horizontalement. Une telle disposition permet de fournir un passage de grande largeur à l'eau devant être évacuée du récipient 1 sans nécessiter une place très importante pour son implantation.

Le dispositif de vidange selon l'invention comporte un bouchon 2 présentant une face avant 20 de même forme que l'ouverture 11 de la paroi mais de dimensions légèrement inférieures afin d'être introduite sans difficulté dans ladite ouverture 11. Autour de cette face avant 20, le bouchon 2 présente une gorge 22 pour la mise en place d'un joint 21 destiné à être en appui contre la face externe de la paroi 10 autour de l'ouverture 11 afin d'assurer l'étanchéité du récipient lorsque le dispositif de vidange est fermé. Le bord périphérique 23 de la gorge est en retrait par rapport à la face avant 20 du bouchon.

Des nervures de raidissement 25 sont prévues afin de coopérer avec la paroi externe 26 du bouchon 2 pour donner à celui-ci le résistance nécessaire.

Le bouchon 2 présente une ouverture centrale 24 pour le passage d'une tige filetée 30 que comporte la bride 3 assurant la fermeture du dispositif de vidange selon l'invention.

Comme visible sur les figures, la bride 3 est de dimensions largement inférieures aux dimensions de l'ouverture 11 du récipient 1. La bride est elle aussi de forme allongée, dans l'exemple représenté elle est rectangulaire. Sa grande dimension, qui est sa hauteur dans la disposition de la figure 1, est supérieure à la petite dimension de l'ouverture 11 tout en étant inférieure à la grande dimension de celle-ci et sa petite dimension largement inférieure à la petite dimension de l'ouverture 11.

La hauteur de la bride 3 est alors supérieure à la hauteur de l'ouverture 11 tout en étant inférieure à la largeur de celle-ci. La largeur de la bride 3 est quant à elle largement inférieure à la hauteur de l'ouverture 11.

La bride 3 est ainsi telle qu'elle puisse facilement traverser ladite ouverture 11 dans une première position pour laquelle elle est disposée avec sa grande dimension horizontale.

La tige filetée 30 est portée par la face 31 de la bride tournée vers la paroi 10 du récipient.

Cette face 31 porte encore une nervure 32 de forme telle que dans la position de la bride représentée aux figures les portions supérieures et inférieures de celle-ci soient disposées à proximité des bords horizontaux de l'ouverture 11. Lesdites portions supérieures et inférieures de la nervure 32 s'étendent à distance du bord de la face 31 afin que, dans une seconde position, la bride 3 soit, comme représenté, en contact avec la surface interne au récipient de la paroi 10.

Un joint d'étanchéité 33 est disposé autour de la tige filetée 30.

La bride 3 comporte encore, sur sa face tournée vers l'intérieur du récipient 1, une nervure longitudinale 34 pour sa rigidification.

Un écrou à oreilles 4 complète le dispositif de vidange selon l'invention ; cet écrou est monté sur la tige filetée 30 du côté du bouchon 2 opposé au récipient 1 et sa perte est évitée par une butée arrière 35 prévue à l'extrémité de ladite tige filetée 30. Une telle butée arrière 35 peut être prévue sous la forme d'un bourrelet formé dans la tige ou par la mise en place d'un circlips ou d'une goupille.

Cette butée arrière sera bien entendue créée après le montage de la bride 3 sur le bouchon 2 effectué en insérant la tige filetée 30 munie du joint d'étanchéité 33 dans l'ouverture centrale 24 dudit bouchon 2 et le vissage de l'écrou 4.

Le dispositif selon l'invention ayant maintenant été décrit, nous allons en expliquer l'utilisation.

Dans sa position de fermeture du récipient 1, le dispositif est positionné comme représenté sur les figures avec le bouchon 2 contre la paroi 10 du récipient 1 et à l'extérieur de celui-ci avec le joint d'étanchéité 21 autour de l'ouverture 11. Le bouchon 2 est maintenu en appui contre la paroi du récipient par la mise en oeuvre de la bride 3 et de l'écrou 4. La bride est en appui contre la surface interne du récipient 1 au dessus et au dessous de l'ouverture 11 par les portions d'extrémité de sa surface 31 en étant positionnée par la nervure 32. Le serrage de l'écrou 4 permet de pincer la paroi 10 du récipient entre la bride 3 et le bouchon 2 afin d'assurer la fermeture de l'orifice 11. Ce pincement permet de faire pénétrer la face avant 20 du bouchon dans l'ouverture 11 ce qui est rendu possible par la position en retrait du bord périphérique 23 et permet d'assurer un positionnement parfait dudit bouchon dans l'ouverture. Les joints d'étanchéité 21 et 33 permettent d'éviter toute fuite.

Lorsque l'on désire vider le récipient 1, il suffit de dévisser l'écrou 4 afin d'écarter la bride 3 du bouchon 2. L'eau peut alors s'infiltrer peu à peu entre la paroi 10 et le bouchon 2. En dévissant totalement l'écrou 4, celui-ci arrive contre la butée arrière 35 de la tige filetée 30 et la continuation du dévissage assure l'entraînement en rotation de la bride 3. Lorsque ladite bride a effectué une rotation d'un quart de tour, elle peut passer au travers de l'ouverture 11, le dispositif n'étant plus maintenu contre la paroi du récipient peut alors être retiré ce qui dégage totalement l'ouverture 11.

La forme rectangulaire est adoptée de manière préférée car elle permet un bien meilleur passage de l'eau et des impuretés qu'elle contient lors de la vidange qu'une forme arrondie dont le contour a un effet de freinage. En effet une ouverture rectangulaire offre un passage inférieur selon une droite et non suivant un point bas unique ce qui augmente considérablement la possibilité de vidange du récipient en permettant à la nappe d'eau disposée au fond du récipient de s'écouler et aux pailles et autre saletés de passer.

Des essais ont étés effectués en prévoyant dans un récipient contenant 600 litres d'eau une ouverture d'évacuation de 95x50 mm, la vidange s'est effectuée en 2 mn 30.

Lors de la remise du dispositif de vidange en position de fermeture du récipient, l'on introduit celui-ci dans l'ouverture 11 avec la bride disposée horizontalement puis on fait effectuer à ladite bride un quart de tour et l'on retire un peu le dispositif vers l'extérieur afin de positionner les portions supérieure et inférieure de la nervure 32 contre les côtés de l'ouverture 11. On peut alors procéder au vissage de l'écrou 4 jusqu'à pincer convenablement la paroi 10 du récipient entre la bride 3 et le bouchon 2 puisque la bride 3 est empêchée de tourner par les portions de la nervure 32 positionnées près des bords de l'ouverture.

La pénétration de la face avant 20 du bouchon dans l'ouverture 11 du récipient assure le centrage dudit bouchon dans l'ouverture ce qui permet un remontage tout à fait rapide et aisé du dispositif de vidange selon l'invention.

Comme on aura pu le comprendre, le dispositif selon l'invention offre une grande facilité se manoeuvre du fait que :

– il est accessible de l'extérieur,

– il n'y a aucun risque de ne pas pouvoir le démonter à cause d'un grippage des filets puisque la partie de la tige filetée 30 portant l'écrou 4 n'est pas au contact de l'eau contenue dans le récipient,

– aucun outil est nécessaire du fait de la facilité d'utilisation de l'écrou à oreilles 4.

De plus, le dispositif selon l'invention se monte sur toute paroi plane de récipient possédant une ouverture découpée au bon format sans nécessiter d'usinage complémentaire.

L'encombrement du dispositif est très faible tant à l'intérieur qu'à l'extérieur du récipient ce qui est généralement très apprécié.

Enfin, le dispositif selon l'invention est un ensemble indissociable grâce à la butée prévue à l'extrémité de la tige filetée 30 qui empêche le démontage de l'écrou 4.

## Revendications

1. Dispositif de vidange pour récipient présentant une ouverture (11) de vidange, du type comportant un bouchon (2) et une bride (3), caractérisé en ce que :

   – le bouchon (2) est destiné à être positionné à l'extérieur du récipient (1), devant l'ouverture (11) de celui-ci,

   – la bride (3) est destinée à être positionnée à l'intérieur du récipient (1) et comporte une tige filetée (30) s'étendant à travers une ouverture centrale (24) du bouchon (2) et portant un écrou (4) sur sa partie située du côté du bouchon (2) opposé au récipient (1),

   et en ce que ladite bride (3) est de dimensions telles qu'elle puisse dans une première position traverser facilement ladite ouverture (11) tandis qu'elle est en appui contre la paroi (10) entourant l'ouverture (11) dans une seconde position, et porte, sur sa face (31) tournée vers la paroi (10) du récipient, une nervure (32) de forme telle qu'elle soit disposée en partie à proximité des bords de l'ouverture (11) lorsque la bride est dans sa seconde position.

2. Dispositif de vidange selon la revendication 1, caractérisé en ce que l'ouverture (11) du récipient est. allongée et par exemple rectangulaire.

3. Dispositif de vidange selon l'une quelconque des revendications précédentes, caractérisé en ce que ladite ouverture (11) est prévue dans une paroi verticale (10) du récipient avec son grand côté disposé horizontalement.

4. Dispositif de vidange selon l'une quelconque des revendications précédentes, caractérisé en ce que le bouchon (2) présente une face avant (20) de même forme que l'ouverture (11) de la paroi mais de dimensions légèrement inférieures afin d'être introduite sans difficulté dans ladite ouverture et une gorge (22) autour de cette face avant (20), pour la mise en place d'un joint d'étanchéité (21) destiné à être en appui contre la face externe du récipient.

5. Dispositif de vidange selon la revendication 4, caractérisé en ce que la face avant (20) dudit bouchon assure un positionnement parfait dudit bouchon (2) dans l'ouverture (11).

6. Dispositif de vidange selon l'une quelconque des revendications 2 à 5, caractérisé en ce que la bride (3) est rectangulaire avec sa grande dimension supérieure à la petite dimension de l'ouverture (11) tout en étant inférieure à la grande dimension de celle-ci et sa petite dimension largement inférieure à la petite dimension de l'ouverture (11).

7. Dispositif de vidange selon l'une quelconque des revendications précédentes, caractérisé en ce que la tige filetée (30) est portée par la face (31) de la bride tournée vers la paroi (10) du récipient.

8. Dispositif de vidange selon l'une quelconque des revendications précédentes, caractérisé en ce que la nervure (32) de la bride est à proximité de l'ouverture par ses portions supérieure et inférieure, lesdites portions supérieures et inférieures de la nervure (32) s'étendant à distance du bord de la bride (3) afin que celle-ci soit en contact avec la surface interne du récipient.

9. Dispositif de vidange selon l'une quelconque des revendications précédentes, caractérisé en ce qu'une butée arrière (35) est prévue à l'extrémité de la tige filetée (30) afin d'éviter tout risque de perte de l'écrou (4) et de dissociation du dispositif.

# FIG.1

FIG.2

FIG.3

Office européen
des brevets

**RAPPORT DE RECHERCHE EUROPEENNE**

Numero de la demande

EP    91 40 3204

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-2 088 110 (SOCIETE DE RECHERCHES ET DE COMMERCIALISATION DE PRODUITS DE RESINES) * page 6, ligne 19 - page 7, ligne 32; figures * | 1,3,4,6 | B65D90/10 F16J13/08 |
| D,A | DE-A-2 834 270 (HAASE) * le document en entier * | 1,4,6,9 | |
| D,A | GB-A-2 207 946 (CULLIGAN INTERNATIONAL COMPANY) * le document en entier * | 1,2,3,6 | |
| D,A | US-A-1 788 118 (MEYER) * le document en entier * | 1,4 | |
| A | EP-A-0 365 808 (MAN NUTZFAHRZEUGE) * le document en entier * | 1 | |

DOMAINES TECHNIQUES
RECHERCHES (Int. Cl.5)

B65D
B62D
F16J

Le présent rapport a été établi pour toutes les revendications

| Lieu de la recherche | Date d'achèvement de la recherche | Examinateur |
|---|---|---|
| LA HAYE | 28 FEVRIER 1992 | OSTYN T.J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant